# EUROPEAN PATENT APPLICATION

(11) **EP 3 182 360 A1**
(43) Date of publication of application: **21.06.2017**
(21) Application number: 15200833.0
(22) Date of filing: 17.12.2015
(51) Int. Cl.: G06Q 20/40

(54) **SYSTEM AND METHOD OF ADDING A DYNAMIC SECURITY CODE TO REMOTE PURCHASES**

(71) Applicant: MasterCard International Incorporated, Purchase, NY 10577-2509 (US)
(72) Inventor: FORREST, John, Dublin, 3 (IE)
(74) Representative: Keane, Paul Fachtna

(57) **Abstract**

A method of providing authentication information for a card not present transaction; the method comprising a card provider associating an electronic communication medium of a user with a payment card of the user in advance of the transaction, the card provider generating a virtual security code which is associated with the payment card, the card provider providing the virtual security code to the electronic communication medium for retrieval by the user, the card provider recording at least one characteristic each time the virtual security code is submitted by the user to an online authentication process associated with a transaction, and the card provider providing a replacement virtual security code to the electronic communication medium in response to the recorded at least one characteristic.

## Description

### Field

The present application relates to a card not present payment system. More particularly, it relates to a method and system for improving the security of a card not present transaction.

### Background Of The Invention

The use of transaction or payment tokens, such as a credit card, debit card, or radio frequency device, is an increasingly important method for making payments, performing fund transfers, or effecting other transactions. These transactions can occur face-to-face at a point of sale, over the telephone, through the mail, over the Internet, or in other contexts. Regardless of the type of transaction, it is clearly desirable for all entities associated with the transaction to reduce the chance of fraud, through the unauthorized use of the transaction token and/or the payment account associated with the transaction token.

A card not present CNP transaction is a payment card transaction made where the cardholder does not or can not physically present the card for a merchant's visual examination at the time that an order is given and payment effected, such as for mail-order transactions by mail or fax, or over the telephone or Internet.

Card not present transactions are a major route for credit card fraud, because it is difficult for a merchant to verify that the actual cardholder is indeed authorizing a purchase. In particular, a user is not requested to enter his or her PIN as part of a card not present transaction.

If a fraudulent CNP transaction is reported, the acquiring bank hosting the merchant account that received the money from the fraudulent transaction must make restitution; whereas with a swiped (card present) transaction, the issuer of the card or card provider is liable for restitution. Because of the greater risk, some card issuers charge a greater transaction fee to merchants who routinely handle card not present transactions.

The card security code system has been set up to reduce the incidence of credit card fraud arising from CNP. A card security code (CSC), (also called card verification data, card verification number, card verification value, card verification value code, card verification code, verification code (V-code or V code), card code verification, or signature panel code (SPC) are different terms for a security feature for "card not present" payment card transactions instituted to reduce the incidence of credit card fraud.

The CSC is in addition to the bank card number which is embossed or printed on the card. The CSC is used as a security feature, in situations where a PIN cannot be used. The PIN is not printed or embedded on the card but is manually entered by the cardholder during a point-of-sale (card present) transactions. Contactless card and chip cards may electronically generate their own code, such as iCVV or Dynamic CVV.

The use of the CSC cannot protect against phishing scams, where the cardholder is tricked into entering the CSC among other card details via a fraudulent website. The growth in phishing has reduced the real-world effectiveness of the CSC as an anti-fraud device. There is now also a scam where a phisher has already obtained the card account number (perhaps by hacking a merchant database or from a poorly designed receipt) and gives this information to the victims (lulling them into a false sense of security) before asking for the CSC (which is all that the phisher needs).

Regulators and all parties to transactions are seeking new methods of stronger cardholder authentication, to reduce fraud risk.

### Summary

According to an aspect of the invention, there is provided a method of providing authentication information for a card not present transaction; the method comprising:
a card provider associating an electronic communication medium of a user with a payment card of the user in advance of the transaction;
the card provider generating a virtual security code which is associated with the payment card;
the card provider providing the virtual security code to the electronic communication medium for retrieval by the user;
the card provider recording at least one characteristic each time the virtual security code is submitted by the user to an online authentication process associated with a transaction; and
the card provider providing a replacement virtual security code to the electronic communication medium in response to the recorded at least one characteristic.

In one embodiment, the at least one characteristic comprises the number of times that the virtual security code is submitted to the online authentication process.

In one embodiment, the at least characteristic comprises the amount of funds associated with a transaction.

In one embodiment, the at least one characteristic comprises geographical data associated with a merchant with which the user is conducting the transaction.

In one embodiment, the at least one characteristic, the card provider provides a replacement virtual security code in response to receiving a request from the user.

In an exemplary the user submits a user security code to a merchant during the online authentication process associated with the transaction.

In an exemplary embodiment, the card provider receives the user security code from the merchant and the card provider authorises the transaction if the user security code matches the virtual security code.

In one embodiment, the card provider maintains a database of virtual security codes, each associated with a corresponding payment card.

In an exemplary embodiment, the database is updated each time a virtual security code is generated.

In one embodiment, the electronic communication medium is an SMS text message, a multimedia message, an email or a mobile application messaging service.

In an exemplary embodiment, the electronic communication medium is a software app executing on a user device which receives the virtual security code from the card provider.

In one embodiment, the software app comprises a user interface for facilitating retrieval of the virtual security code.

In an exemplary embodiment, the virtual security code is cancelled by the card provided in response to the at least one recorded characteristic.

The present disclosure also relates to computing system configured for providing authentication information for a card not present transaction, the computing system comprising:
a memory; and
one or more processors configured to:
   associate an electronic communication medium of a user with a payment card of the user in advance of the transaction;
   generate a virtual security code which is associated with the payment card;
   provide the virtual security code to the electronic communication medium for retrieval by the user;
   record at least one characteristic each time the virtual security code is submitted by the user to an online authentication process associated with a transaction; and provide a replacement virtual security code to the electronic communication medium in response to the recorded at least one characteristic.

Additionally, the present disclosure relates to a computer-readable medium comprising non-transitory instructions which, when executed, cause one or more processors to carry out a method comprising:
associate an electronic communication medium of a user with a payment card of the user in advance of the transaction;
generate a virtual security code which is associated with the payment card; provide the virtual security code to the electronic communication medium for retrieval by the user;
record at least one characteristic each time the virtual security code is submitted by the user to an online authentication process associated with a transaction; and provide a replacement virtual security code to the electronic communication medium in response to the recorded at least one characteristic.

### Brief Description Of The Drawings

The present application will now be described with reference to the accompanying drawings in which:
Figure 1 is a diagram of a system according to an embodiment of the invention;
Figure 2 is a flow diagram depicting a method of registering a card according to an embodiment of the invention;
Figure 3 is a flow diagram depicting an exemplary method of facilitating a transaction according to an embodiment of the invention;
Figure 4 is a flow diagram depicting an exemplary method of updating a dynamic security code according to an embodiment of the invention.
Figure 5 depicts a communication sequence in accordance with an exemplary embodiment of the invention; and
Figure 6 is a block diagram illustrating an exemplary configuration of a mobile device according to an exemplary embodiment of the invention.

### Detailed Description Of The Drawings

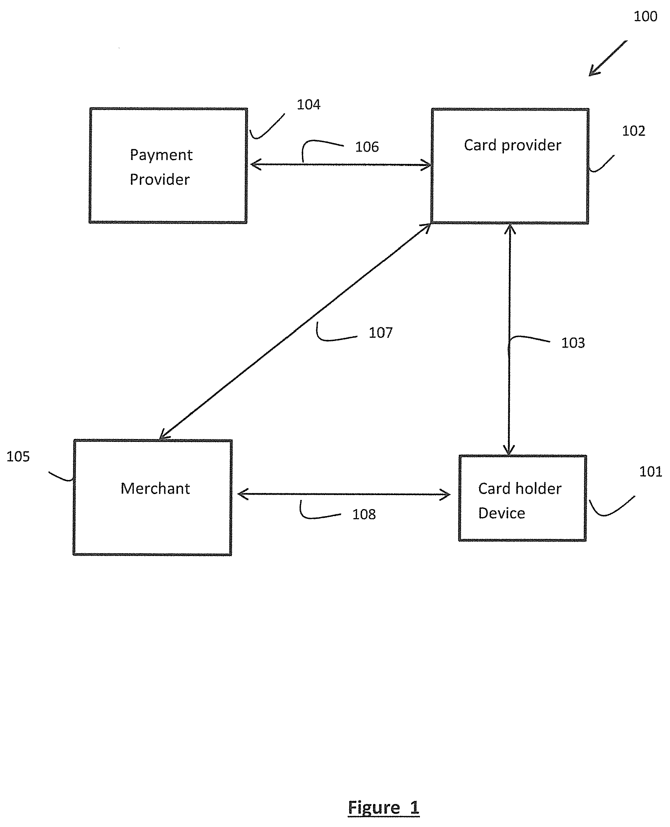

Referring to the drawings and, in particular to Figure 1, an exemplary payment system 100 for processing payment requests is shown. It will be understood that the exemplary payment system 100 is provided to assist in an understanding of the present teaching and is not to be construed as limiting in any fashion. Furthermore, modules or elements that are described with reference to any one figure may be interchanged with those of other figures or other equivalent elements without departing from the spirit of the present teaching.

The system 100 comprises at least one user or cardholder device 101 adapted to transmit communications to, and to receive communications from, a card provider 102 over a network or communication link 103.

The user device 101 may be a portable computing device (e.g. a laptop computer, a smartphone, a tablet computer etc.); a desktop computer; or any other suitable device. In an exemplary embodiment, the user device 101 is running (or 'executing') a software application or 'app' which, when executed by a processor of the user device 101 receives communications from the card provider.

The card provider 102 may comprise, or be comprised within, any suitable device. For example, the card provider 102 may comprise, or be comprised within, a remote server. Additionally or alternatively, the card provider 102 may be comprised within a base station. In what follows, the card provider 102 will be referred to as a single node within the system 100. However, it will be appreciated that the card provider 102 may comprise multiple individual nodes at which the request is processed and/or re-transmitted. In an exemplary embodiment, the card provider 102 is a server operating in association with a software application or 'app' that is running (or being executed) on the user devices 101.

In an exemplary embodiment, the network 103 may comprise any network across which communications can be transmitted and received. For example, the network 103 may comprise a wired or wireless network. The network 103 may, for example, comprise one or more of: the internet; a local area network; a radio network such as a mobile or cellular network; a mobile data network or any other suitable type of network. In one embodiment the user terminal 101 communicates over the internet with the card network 102 operating on 'a cloud'

A payment provider 104 is also provided in the payment system 100. The payment provider is a network node operated by, in association with, or on behalf of the card issuer. The payment provider 104 provides an account from which the user can make payments to payment recipients. The payment provider 104 receives a payment request from a the card provider 102 through a network 106; processes the received request to ensure that the details provided meet the necessary requirements (e.g. the card number and or other security details are the expected values for use in association with the account); determines whether there are sufficient funds and/or a sufficient credit limit to make the requested payment; and, if so, effects the requested payment.

The payment request is received by the card provider 102 from a merchant 105 using network 107. Specifically, a user or card holder conducts a transaction with the merchant 105 and as part of the part transaction, the merchant requests payment from the card provider 102. In the preferred embodiment, the transaction between the card holder and the merchant is a card not present transaction. For example, the merchant 105 may be hosting a website that the card holder or user can interact with in order to perform a transaction. Alternatively, the card holder can communicate by phone with the merchant 105 or by using any communication means know to the skilled person.

In the system 100 of Figure 1, the card holder device 101 can communicate with the merchant across a network 108. However, the device 101 does not have to be used to communicate with the merchant to perform the card not present transaction. For example, a user or card holder could simply ring the merchant or use another user device (other than the card holder device 101) to interact with a website hosted by the merchant 105.

It should be appreciated that networks 103, 106, 107 and 108 may all be the same or different networks employing the same technology or different networks.

As will be explained in more detail, the system 100 is used to perform a card not present transaction using a dynamic or virtual security code. However, prior to performing any transaction, the card and associated electronic communication medium must be registered with the card provider 102.

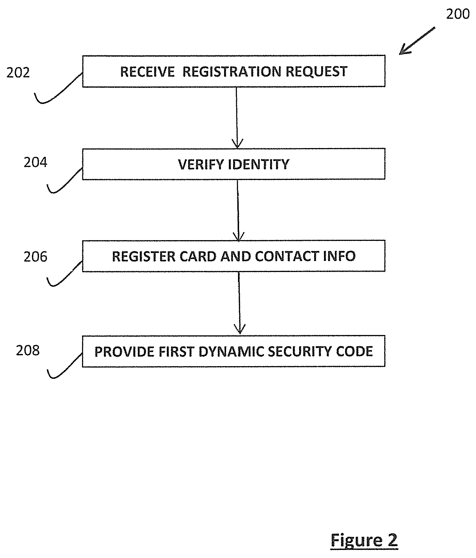

Figure 2 outlines the procedure 200 for registering a card of the card holder. That is, Figure 2 provides the steps of associating an electronic communication medium of a user with a payment card of the user in advance of a transaction. The card provider 102 maintains a database of virtual or dynamic security codes (DSC) associated with specific payment cards. A registration request is received 202 at the card provider 102. The registration request involves submitting card details as well as electronic communication medium details (or contact information) for the user. Any method of submission may be used. For example, the card holder device 101 may be running an app, which can communicate the information to the card provider 102. Alternatively, the information is submitted by phone or through a website using a PC. The electronic communication medium may be a mobile phone number, email address, a generic messaging app or a dedicated app provided by the card provided and installed on the card holder device 101. As is known to the skilled person, registration also involves the submission of information sufficient to identify the card holder as the legitimate card holder. Any number of security procedures can be used for this verification process.

At step 204, the submitted information is checked against information held by the card provider and if the information matches, the card and electronic communication medium is registered by the card provider 102. The card provider generates a virtual security code which is associated with the payment card. The registration step 206 also involves the allocation of a dynamic security code to the newly registered card. The card, virtual security code and electronic communication medium are all maintained by the card provider 102 either locally or at a remote location.

The dynamic security code allocated to the registered card is then provided to the user at step 208. The virtual security code is provided using the electronic communication medium registered at the card provider 102. For example, if a mobile phone number has been registered, the dynamic security code can be provided in the form of an SMS text to the provided phone number. The phone number may be associated with a user or card holder device such as the device 101 of Figure 1.

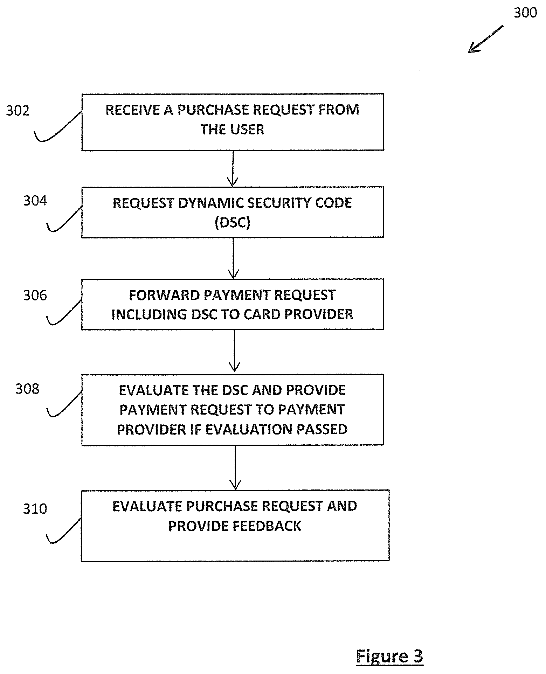

Once the registration procedure 200 is complete, a user may carry out a card not present transaction. The procedure 300 for such a card not present transaction is outlined with reference to Figure 3.

At step 302, the merchant 105 receives a purchase request from the user or card holder. This may involve the user submitting a purchase request at the merchant's website, over the phone etc. In an exemplary embodiment, the steps of Figure 3 are performed as part of an online authentication process associated with a transaction.

The card holder is asked to submit (step 304), to the merchant, a dynamic or virtual security code (DSC). As is known to the person skilled in the art, the user must also submit other information associated with the card such as the card number, expiry date etc. If the DSC is not submitted by the user, the merchant 105 may choose to switch to an alternative authentication scheme. Alternatively, the merchant may choose to cancel or decline the transaction if a dynamic security code is not provided.

If a DSC is received by the merchant 105 from the user, this is forwarded (step 306) along with other transaction information (such as the amount of funds requested) to the card provider 102.

At step 308, the received DSC is evaluated by the card provider 102. That is, the card provider 102 accesses a database to determine the virtual security code allocated to the payment card used for the transaction. The received dynamic security code is compared against the received security code. If the two security codes match, the transaction is authorised and the payment request is forward to the payment provider 104. However, if the received dynamic security code does not match the stored security code, the transaction is declined and a message is sent to the merchant 105 notifying it that the transaction is declined.

At step 308, the number of times that the received dynamic security code has been used in transactions is also checked. If the number of times exceeds a predetermined number of times, the transaction may be declined. As will be explained in more detail, at step 308, the card provider records at least one characteristic each time the virtual security code is submitted by the user to an online authentication process associated with a transaction.

At step 310, the payment provider 104 has received the payment request from the card provider 102. The purchase request is evaluated by the payment provider. For example, the payment provider checks if there is sufficient funds in the card holder or user's account to meet the payment request. The payment provider either approves or declines the payment request and provides feedback to the payment card provider. The decision to approve or decline the transaction is in turn provided to the merchant 105 and the card holder. For example, a message may be displayed on the website of the merchant stating that the card not present transaction has been declined. If the transaction has been approved, the card holder or user is notified that the transaction has been completed.

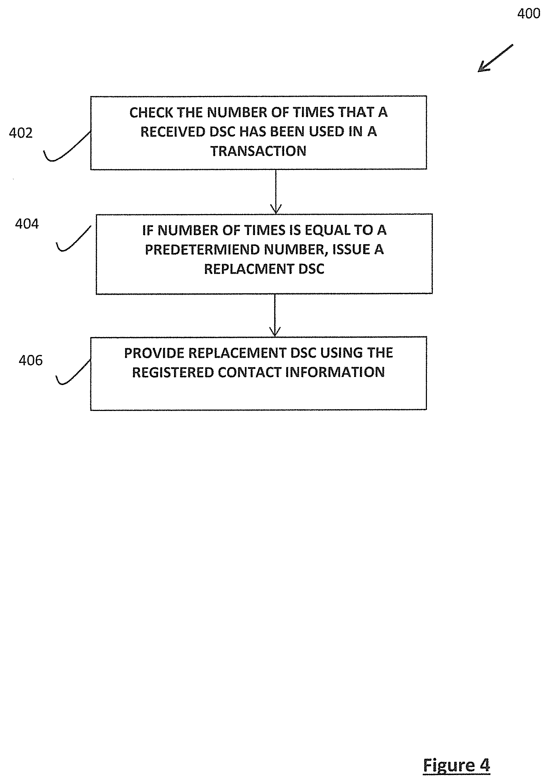

Turning to Figure 4, a method of updating the virtual security code provided to the card holder is shown.

At step 402, the card provider 102 checks how many times a received dynamic security code has been used in a transaction. Each time the card provider 102 receives a payment request; it records and updates the number of times that the dynamic security code has been used in a transaction (part of step 308 of Figure 3).

However, it should be appreciated that the number of times that the card is used is only one of a number of characteristics recorded by the card provider. The card provider records at least one characteristic each time the virtual security code is submitted by the user to an online authentication process associated with a transaction.

At step 404, if the number of times that a dynamic security code has been used is equal to a predetermined number of times, the card provider 102 issues a replacement dynamic security code to the card holder 101. This is similar to step 208 of the registration process in that the dynamic security code is provided using the electronic communication medium registered at the card provider 102 for the card in question i.e., the electronic communication medium of the user associated with the payment card.

The aforementioned characteristic may comprise the amount of funds associated with a transaction. If the amount of funds requested is above a predetermined limit, a replacement virtual security code may be provided for increased security. That is, the previous virtual code is cancelled and if the user cannot provide the new/replacement virtual code, the transaction will not be authorised.

The characteristic may also comprises geographical data associated with a merchant with which the user is conducting the transaction. For example, if the merchant is based in a country which is considered high risk, a replacement virtual security code may be issued.

A cardholder or user may also request an updated dynamic security code at any time. For example, if they feel the security of the previous virtual security code has been compromised. The card provider provides the replacement virtual security code in response to receiving a request from the user.

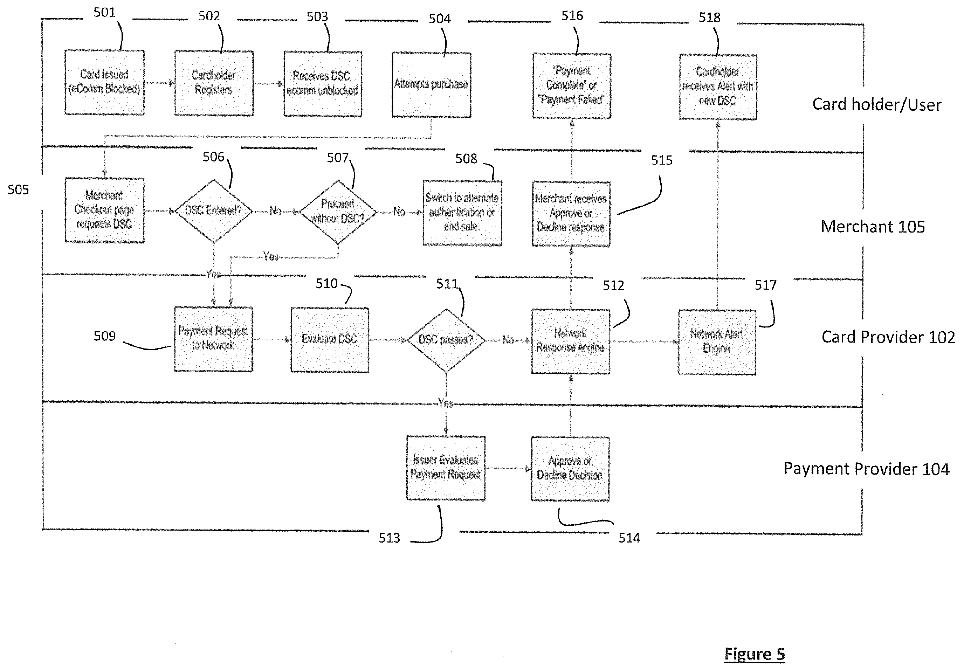

Figure 5 provides an overview of the payment system and the interaction of the various entities.

At step 501, the card holder or user is blocked from any eCommerce transactions i.e., card not present transaction. At step 502, the cardholder registers with the card provider 102. At step 503, the card holder receives the dynamic security code and can now perform card not present transactions. It will be appreciated that steps 502 and 503 are part of the registration process outlined in Figure 2. At step 504, the card holder begins or attempts a card not present purchase or transaction.

At step 505, the merchant 105 requests a virtual security code from the card holder as part of the transaction procedure. For example, the card holder must enter the virtual security code on a website hosted by the merchant.

At step 506, the merchant 105 determines if the virtual security code has been entered. If the code has not been entered, a determination is made whether to continue with the transaction without the dynamic security code. If the determination is not to continue without the security, an alternate authentication method may be used or the transaction procedure ended at step 508. Alternatively, the merchant may proceed with the transaction without the security code or an alternative authentication procedure. This may happen where the transaction is for less than a predetermined amount e.g., €10 and the merchant is willing to proceed without a security coder for such an amount. For the remainder of the process of Figure 5, it will be assumed that a virtual security code has been submitted by the card holder to the merchant.

At step 509, the payment request is received by the card provider 102 from the merchant 105. At step 510, the received dynamic security code is evaluated to determine if the received code matches the code held by the card provider 102 (the virtual code associated with the payment card. That is, the card provider 102 determines if the virtual security code allocated at step 503 matched the user code security code received at step 509. If the security code received from the merchant 105 matches (passes) at step 511, the payment request is forwarded to the payment provider 104. If the security code received from the merchant 105 does not match the dynamic security code on file at the cad provider 102, a response engine of the card provider sends a transaction declined message to the merchant at step 512.

At step 513, the payment provider 104 evaluates the payment request. For example, the payment provider checks that there are sufficient funds in the user's account to cover the transaction. At step 514, the request is approved or declined and the card provider 102 is notified accordingly. The approval or declination of the payment request is forwarded to the merchant 105 at step 512. At step 515, the merchant 105 receives the approval or declination of the transaction and forwards it to the card holder. At step 516, the card holder is notified of "payment complete" or "transaction failed".

Step 517 involves the card provider 102 sending a new or replacement virtual security code to the card holder. This is done as explained in Figure 4, if the current code has been used a predetermined number of times or if the card holder/user requests a replacement code. The card holder receives the replacement DSC at step 518. That is, the replacement code may be received at an app on the card holder device 101, at an email account registered by the card holder, or via an SMS message sent to the card holder device.

As described above, mobile computing devices such as smartphones and tablets may be configured to run an application used in the implementation of the methods of the present disclosure.

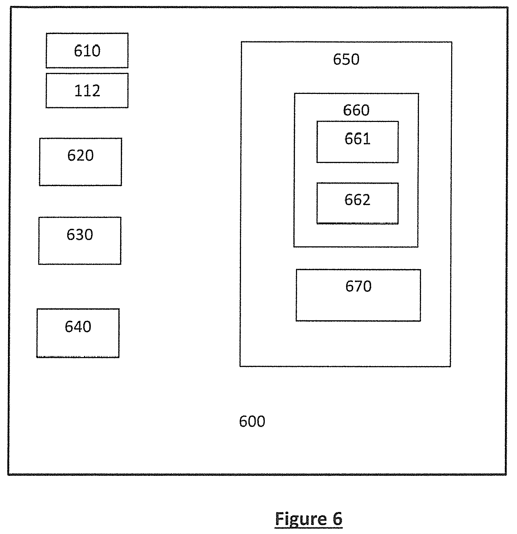

Figure 6 is a block diagram illustrating a configuration of the mobile device 600 according to an embodiment of the present disclosure. For example, the mobile device of Figure 6 may be used as the card holder device 101 of Figure 1. Referring to Figure 6, the mobile device 600 comprises a user interface 610, a processor 620 in communication with a memory 650, and a communication interface 630. The processor 620 functions to execute software instructions that can be loaded and stored in the memory 650. The processor 620 may include a number of processors, a multi-processor core, or some other type of processor, depending on the particular implementation. The memory 650 may be accessible by the processor 620, thereby enabling the processor 620 to receive and execute instructions stored on the memory 650. The memory 650 may be, for example, a random access memory (RAM) or any other suitable volatile or non-volatile computer readable storage medium. In addition, the memory 650 may be fixed or removable and may contain one or more components or devices such as a hard drive, a flash memory, a rewritable optical disk, a rewritable magnetic tape, or some combination of the above.

One or more software modules 660 may be encoded in the memory 650. The software modules 660 may comprise one or more software programs or applications having computer program code or a set of instructions configured to be executed by the processor 620. Such computer program code or instructions for carrying out operations for aspects of the systems and methods disclosed herein may be written in any combination of one or more programming languages.

The software modules 660 may include a GPS tracking app 661 and one or more apps 662 configured to be executed by the processor 620. The software modules may comprise an app as described above. That is, the electronic communication medium may be a software app executing on a user device which receives the virtual security code from the card provider. During execution of the software modules 660, the processor 620 configures the mobile device 100 to perform various operations relating to the facilitating and processing of transactions according to embodiments of the present disclosure, as has been described above.

Other information and/or data relevant to the operation of the present systems and methods, such as a database 670, may also be stored on the memory 150. The database 670 may contain and/or maintain various data items and elements that are utilized throughout the various operations of described above.

A communication interface 640 is also operatively connected to the processor 620 and may be any interface that enables communication between the mobile device 100 and external devices.

A user interface 610 is also operatively connected to the processor 620. The user interface may comprise one or more input device(s) such as switch(es), button(s), key(s), and a touchscreen.

The user interface 610 functions to allow the entry of certain information about the user for example as part of the above outlined registration process. The user interface 610 functions to facilitate the capture of commands from the user such as card details as well as electronic communication medium details (or contact information) for the user as described above.

A display 612 may also be operatively connected to the processor 620. The display 612 may include a screen or any other such presentation device that enables the user to view various information such as the virtual security code received from the card provider. The display 612 may be a digital display such as an LED display. The user interface 610 and the display 612 may be integrated into a touch screen display.

It will be appreciated that the present disclosure adds a layer of card holder authentication while using the existing payment network messaging as shown in Figure 1. In this manner online purchasing or phone-based ordering where a merchant cannot view the card at the time of transaction are made more secure. Fraud can be greatly reduced or eliminated using this added layer of authentication to a card-present not present transaction.

As will be appreciated by the skilled person, Chip-and-PIN credit card technology does not protect against card-not-present transaction fraud. A stolen card contains all of the required information to conduct fraudulent transactions. Customers report lost or stolen cards to the appropriate financial institution and are required to wait several days before re-issue of a replacement card.

However, using the procedure of the present disclosure, a fraudster is not provided with all the required information to conduct fraudulent transactions if they are in possession of the stolen card. The fraudster does not have the dynamic security code necessary for card not present transactions. Moreover, even if the fraudster cannot request it from a card provider as it will be provided using the registered contact information e.g., to the legitimate card holder's device 101 (or mobile device 600).

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A method of providing authentication information for a card not present transaction; the method comprising:
a card provider (102) associating an electronic communication medium of a user with a payment card of the user in advance of the transaction;
the card provider (102) generating a virtual security code which is associated with the payment card;
the card provider (102) providing the virtual security code to the electronic communication medium for retrieval by the user;
the card provider (102) recording at least one characteristic each time the virtual security code is submitted by the user to an online authentication process associated with a transaction; and
the card provider (102) providing a replacement virtual security code to the electronic communication medium in response to the recorded at least one characteristic.

2. The method of claim 1, wherein the at least one characteristic comprises the number of times that the virtual security code is submitted to the online authentication process.

3. The method of claim 1 or 2, wherein the at least characteristic comprises the amount of funds associated with a transaction.

4. The method of any one of claim 1 to 3, where the at least one characteristic comprises geographical data associated with a merchant with which the user is conducting the transaction.

5. The method of any one of claim 1 to 4, wherein the card provider (102) provides a replacement virtual security code in response to receiving a request from the user.

6. The method of any one of claims 1 to 5, wherein the user submits a user security code to a merchant during the online authentication process associated with the transaction.

7. The method of claim 6, wherein the card provider (102) receives the user security code from the merchant and the card provider (102) authorises the transaction if the user security code matches the virtual security code.

8. The method of any one of claims 1 to 7, wherein the card provider (102) maintains a database of virtual security codes, each associated with a corresponding payment card.

9. The method of claim 8, wherein the database is updated each time a virtual security code is generated.

10. The method of any one of claims 1 to 6 wherein the electronic communication medium is an SMS text message, a multimedia message, an email or a mobile application messaging service.

11. The method of any one of claims 1 to 10, wherein the electronic communication medium is a software app executing on a user device which receives the virtual security code from the card provider (102).

12. The method of claim 11, wherein the software app comprises a user interface for facilitating retrieval of the virtual security code.

13. The method of any one of the claims 1 to 12, wherein the virtual security code is cancelled by the card provided in response to the at least one recorded characteristic.

14. A computing system configured for providing authentication information for a card not present transaction, the computing system comprising:
a memory; and
one or more processors configured to:
associate (206) an electronic communication medium of a user with a payment card of the user in advance of the transaction;
generate a virtual security code which is associated with the payment card;
provide (208) the virtual security code to the electronic communication medium for retrieval by the user;
record (402) at least one characteristic each time the virtual security code is submitted by the user to an online authentication process associated with a transaction; and
provide a replacement virtual security code to the electronic communication medium in response to the recorded at least one characteristic.

15. A computer-readable medium comprising non-transitory instructions which, when executed, cause one or more processors to carry out a method comprising:
associate (206) an electronic communication medium of a user with a
payment card of the user in advance of the transaction;
generate a virtual security code which is associated with the payment card;
provide (208) the virtual security code to the electronic communication medium for retrieval by the user;
record (402) at least one characteristic each time the virtual security code is submitted by the user to an online authentication process associated with a transaction; and
provide a replacement virtual security code to the electronic communication medium in response to the recorded at least one characteristic.
